# EUROPÄISCHE PATENTSCHRIFT

(11) **EP 3 847 383 B1**
(45) Veröffentlichungstag und Bekanntmachung des Hinweises auf die Patenterteilung: **08.06.2022**
(21) Anmeldenummer: 19769730.3
(22) Anmeldetag: 06.09.2019
(51) Int. Cl.: F16D 65/12

(54) **VERBUNDBREMSSCHEIBE FÜR EINE FAHRZEUG-SCHEIBENBREMSE**
COMPOSITE BRAKE DISC FOR A VEHICLE DISC BRAKE
DISQUE DE FREIN COMPOSITE POUR UN FREIN À DISQUE DE VÉHICULE

(30) Priorität: 07.09.2018 DE 102018215297
(43) Veröffentlichungstag der Anmeldung: 14.07.2021
(73) Patentinhaber: Continental Teves AG & Co. OHG, 60488 Frankfurt am Main (DE)
(72) Erfinder: HOLLSTEIN, Frank, 60488 Frankfurt am Main (DE); WELLER, Ralph, 60488 Frankfurt am Main (DE); VALENCIA BLAZQUEZ, Andres, 60488 Frankfurt am Main (DE)
(74) Vertreter: Continental Corporation
(86) Internationale Anmeldenummer: PCT/EP2019/073855
(87) Internationale Veröffentlichungsnummer: WO 2020/049162

(56) Entgegenhaltungen:
- WO-A1-2017/108257
- DE-A1- 3 823 146
- DE-A1- 10 032 972
- DE-A1-102008 018 326

## Beschreibung

Die Erfindung betrifft eine mehrteilig aufgebaute Verbundbremsscheibe für eine Fahrzeug-Scheibenbremse nach dem Oberbegriff des Anspruchs 1, insbesondere zur Verwendung in einem Personenkraftfahrzeug oder einem leichten Nutzfahrzeug. So eine Bremsscheibe ist zum Beispiel aus DE-A-10 2008 018 326 bekannt.

Moderne Fahrzeug besitzen zunehmend höhere Gewichte und Räder mit immer größeren Durchmessern. Dies führt zu stärkeren Bremsanlagen und höheren Belastungen der Bremsscheiben.

Eine Bremsscheibe ist funktionell üblicherweise in einen mit Bremsbelegen kooperierenden Reibring zur Umwandlung der Bewegungsenergie in Wärme und einen Bremsscheibentopf zur Befestigung des Reibrings an einer Radnabe und Drehmomentübertragung.

Insbesondere um ungefederte Massen im Fahrzeug zu reduzieren ist es bekannt, statt schweren einstückigen Gussbremsscheiben sogenannte Verbundbremsscheiben zu verwenden, bei denen der Bremsscheibentopf und der Reibring aus unterschiedlichen, funktionsoptimierten Werkstoffen hergestellt und anschließend zusammengefügt werden. Insbesondere ist es bekannt, den Reibring aus einem reibungsoptimierten Graugusswerkstoff und den Bremsscheibentopf aus einen höherfesten Stahlwerkstoff herzustellen. Derart unterschiedliche Werkstoffe weisen jedoch zum Teil sehr unterschiedliche physikalischen Eigenschaften auf wie beispielsweise Wärmeausdehnungskoeffizienten, Elastizitätsmodule oder Korrosionswiderstände, so dass deren Zusammenfügen eine Herausforderung darstellt.

Aus DE 10 2009 012 2016 A1 ist eine Verbundbremsscheibe mit einem aus dünnwandigen Stahlblech hergestellten Bremsscheibentopfbekannt, welcher in radiale und Umfangsrichtung über ein komplexes komplementäres Verzahnungsprofil mit dem radialen Innenrand des Reibrings verbunden und durch gestanzte sowie umgebogene Laschen in axiale Richtung an diesem gesichert ist.

Vorteilhaft bei dieser Lösung ist, dass der Topfboden des Bremsscheibentopfes besonders dünn ausgebildet ist und das Rad axial mit Vorteilen für Gewicht, Steifigkeit und Kraftübertragung sehr nahe zur Radnabe angebracht werden kann.

Nachteilig sind neben sehr hohen Anforderungen an Herstellwerkzeuge eine relativ geringe Biegefestigkeit, wodurch der Reibring leicht in Bezug zum Bremsscheibentopf verkanten kann.

Ein bekanntes unerwünschtes Phänomen bei Bremsscheiben ist eine erwärmungsbedingte Verformung des Reibrings, sogenannte Schirmung der Bremsscheibe, welche zu Verschlechterung der tribologischen Qualität führt. Der Bremsscheibentopf kann zu asymmetrischen Spannungen führen und diesen Effekt verstärken oder erst verursachen. Weil der Reibring

Aus DE 100 32 972 A1 ist eine andere Verbundbremsscheibe mit einem Bremsscheibentopf aus Stahl bekannt. Die Verbindung mit dem Reibring ist dadurch realisiert, dass am Reibring ein axial abstehender kreiszylindrischer Fortsatz angeformt ist, welcher sich im Bereich der Fügestelle mit dem Mantel des Bremsscheibentopfes überlappt und vernietet ist.

Eine besondere Bedeutung wird dabei der Schirmungsproblematik beigemessen. Dabei wird ein Ansatz verfolgt, thermische Dehnung des Reibrings möglichst wenig zu behindern und den Einfluss durch den Bremsscheibentopf zu reduzieren.

Zu diesem Zweck wird der Reibring-Fortsatz radial innerhalb vom Mantel des Bremsscheibentopfes angeordnet. Weil Stahl sich im Vergleich zum Grauguss stärker ausdehnt, wird asymmetrischer Spannungsaufbau reduziert. Des Weiteren wir angestrebt, den Mantel in radiale Richtung möglichst elastisch zu gestalten, wofür dieser mit Durchbrüchen oder Bereichen mit reduzierter Wandstärke versehen und im Bereich der Fügestelle besonders dünn ausgebildet wird. Eine derartige Konstruktion reduziert jedoch erheblich die Torsionssteifigkeit des Mantels und führt zum Aufbau von Kraft- und Spannungsspitzen insbesondere im Übergangsbereich des Topfbodens in den Mantel. Dadurch wird das zulässige Drehmoment oder jedoch die Dauerhaltbarkeit begrenzt. Des Weiteren muss der Topfboden mehr Torsionsspannungen aushalten, muss daher relativ dick ausgebildet werden.

Vor diesem Hintergrund liegt der vorliegenden Erfindung die Aufgabe zugrunde, eine verbesserte, besonders robuste Verbundbremsscheibe vorzuschlagen, welche bei vereinfachter Herstellbarkeit zur Übertragung von hohen mechanischen und thermischen Lasten bei allen Betriebszuständen geeignet ist und mit einem möglichst dünnen Topfboden ausgebildet werden kann.

Die Aufgabe wird erfindungsgemäß zusammen mit Merkmalen des unabhängigen Anspruchs 1 gelöst. Unteransprüche schlagen erfindungsgemäß weitere vorteilhafte Ausführungen und Weiterbildungen vor.

Eine Schirmungstendenz beziehungsweise Neigung zu thermischen Verformung kann aus heutiger Sicht auch bei asymmetrischen Reibringen durchaus mit anderen Maßnahmen als thermische und Spannungsentkopplung zufriedenstellend beherrscht werden, die nicht Gegenstand dieser Erfindung sind, beispielsweise durch geschickte Massenverteilungen am Reibring.

Die Erfindung sieht daher vor, dass ein am Reibring ausgebildeter kreiszylindrischen Kragen den Topfmantel des Bremsscheibentopfs in einem Verbindungsbereich radial außen umgreift. Dadurch ist eine besonders feste, torsions- und biegesteife Abstützung des Reibrings am Bremsscheibentopf ermöglicht, welche auch bei einem stark erhitzten Reibring nicht geschwächt wird. Die Haftung und Drehmomentübertragung werden in einem erhitzten Zustand durch größere Wärmeausdehnung des Bremsscheibentopfes sogar verstärkt, wodurch eine höhere Sicherheit bei krit9ischen Fahrzuständen wie hohen Geschwindigkeiten oder Bergabfahrten gegeben ist. Zudem wird die Kühlung des Reibringes durch die dem Fahrtwind ausgesetzte Oberfläche des Kragens verbessert.

Gemäß der Erfindung weist der Bremsscheibentopf in einem Übergangsbereich zwischen dem Topfboden und dem Topfmantel eine nach radial außen vorgestreckte massive umlaufende Schulter auf, welche in radiale und axiale Richtungen signifikant stärker als die Bodenstärke ausgebildet ist und vorzugsweise sowohl radial als auch axial mindestens das Zweifache der Bodenstärke beträgt.

Durch das vergrößerte Materialvolumen und vergrößerte Oberfläche können sich Wärme und Kraftfluss besser verteilen. Damit wird der in Bezug auf Kraft- und Spannungsbelastung besonders kritischer Übergangsbereich mechanisch und thermisch entlastet, der Topfboden kann größere Torsionsspannungen aufnehmen höhere Drehmomente übertragen und bietet daher höhere Sicherheitsreserven. Dadurch kann die Bodenstärke reduziert werden. Gemäß einer bevorzugten Weiterbildung kann die Schulter als ein axialer Anschlag für den Kragen verwendet werden, so dass zusätzliche Passelemente entfallen, die Herstellung vereinfacht ist und Biegesteifigkeit weiter erhöht wird.

Gemäß einer weiteren vorteilhaften Weiterbildung kann der Verbindungsbereich in radiale Richtung mit einer Spielpassung ausgebildet sein. Dadurch kann die Herstellung vereinfacht werden, weil in Vergleich zu einer Presspassung geringere Toleranzanforderungen vorausgesetzt werden können. Des Weiteren wird die Gefahr einer Beschädigung durch zu hohe Spannungen bedingt durch den temperaturbedingt besonders stark ausgedehnten Bremsscheibentopf reduziert.

Bevorzugt können die Verbindungselemente als günstige, einfach zu handhabende und sicher haltende Niete, insbesondere Halbhohlniete vorgesehen sein, welche in Bezug auf den Verwendungszweck in Hinblick auf Gewicht, Festigkeit, Umformkräfte und Automatisierbarkeit ein besonders ausgewogenes Verhältnis aufweisen.

Gemäß einer anderen Ausführungsform können die Verbindungselemente auch als nachträglich lösbare und ohne Spezialwerkzeug montierbare Schraubelemente, insbesondere Schrauben-Mutter-Kombinationen ausgebildet werden.

Für eine einfache und sichere Herstellbarkeit sowie optimale Drehmomentübertag der Verbindung können gemäß der Erfindung der Kragen und der Topfmantel im Verbindungsbereich mit zueinander fluchtenden Durchbrüchen, insbesondere Bohrungen, versehen sein, in welche Verbindungselemente gesteckt werden.

Für eine weiter verbesserte Aufnahmefähigkeit von Torsionsspannungen und Drehmomenten und zusätzliche Versteifung des Topfbodens kann gemäß der bevorzugten Ausführungsform am Topfboden im Bereich von Verbindungsbohrungen eine axial in Richtung Reibring vorgestreckte, umlaufende Wulst ausgebildet sein.

Ein optimales Verhältnis hinsichtlich Kosten, Verstellbarkeit, Gewicht und Festigkeit der Verbundbremsscheibe können erreicht werden, wenn der Bremsscheibentopf aus einem Stahlwerkstoff, insbesondere einer hochlegierten Stahlsorte hergestellt wird. Bei Verwendung von rostträgen oder besser rostfreien Stahlsorten könne zudem auch optische Eigenschaften dauerhaft verbessert werden.

Besonders effektiv kann die erfindungsgemäße Bremsscheibe mit Einsatz von hochbelastbaren, innenbelüfteten Reibringen verwendet werden welche zwecks Oberflächenvergrößerung und Bildung von Kühlströmungen durch mehrere in axiale und/oder radiale Richtung erstreckende Kanäle durchbrochen sind.

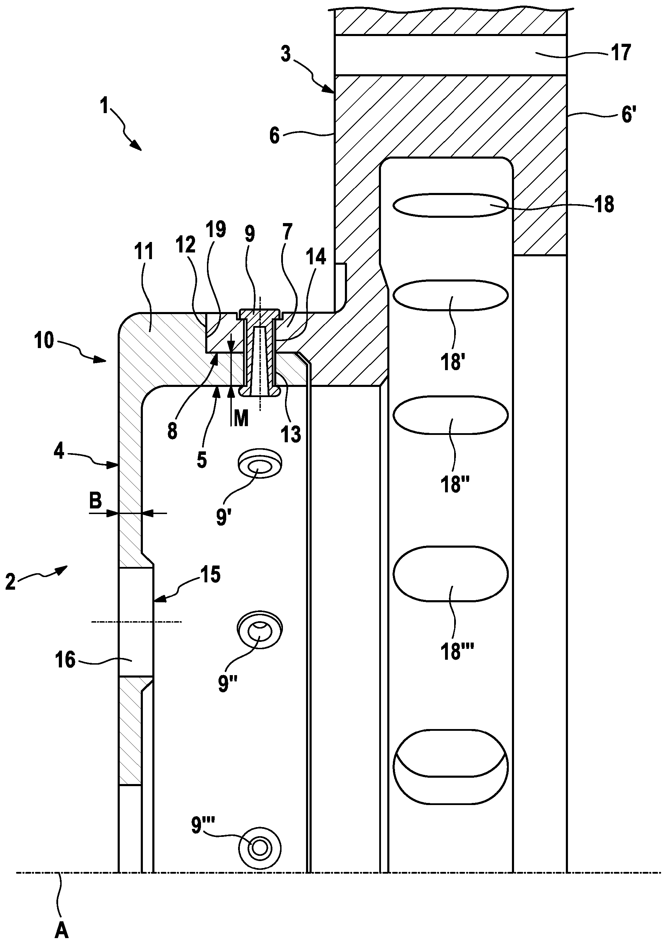

Im Folgenden wird die Erfindung Anhang der Zeichnung näher erläutert. Hierbei ist in Fig.1 eine bevorzugte erfindungsgemäße Ausführungsform in einem axialen Teilschnitt vereinfacht abgebildet.

### Fig.1

Eine Verbundbremsscheibe 1 weist einen Bremsscheibentopf 2 auf, welcher bevorzugt aus Stahl ausgebildet ist wie beispielsweise aus C45, oder einer anderen hochlegierten, rostträgen oder, besonders bevorzugt, einer rostfreien Stahlsorte.

Der Bremsscheibentopf 2 weist einen in Bezug auf die Drehachse A in radiale Richtung erstreckten, mehrfach durchbrochenen besonders dünnwandigen Topfboden 4 und einen vom Topfboden 4 konzentrisch zur Drehachse A ausgebildeten, kreiszylindrischen Topfmantel 5 auf. Die Bodenstärke B ist dabei geringer als die Mantelstärke M vorgesehen.

Der Topfboden 5 ist durch mehrere, üblicherweise 4 oder 5 Verbindungsbohrungen 16 durchbrochen, welche für den Durchgriff mit Radschrauben oder Radbolzen zur Befestigung des Rads an der Radnabe vorgesehen sind. Bei der gezeigten Ausführungsform ist im Bereich der Verbindungsbohrungen 16 am Topfboden 4 eine axial in Richtung Reibring 3 vorgestreckte, umlaufende Wulst 15 ausgebildet, welche die Bodenstärke B lokal erhöht. Für diese Wulst 15 muss in der entsprechenden Radnabe eine korrespondierende Vertiefung vorgesehen sein.

Mit dem mit dem Bremsscheibentopf 2 ist ein Reibring 3 verbunden. Dieser verfügt über zwei axial außen liegenden, in radiale Richtung ausgerichteten Reibflächen 6,6'.

Der Reibring ist dabei vorzugsweise aus einem Gusseisen- beziehungsweise Graugusswerkstoff wie insbesondere GG20, GG15HC oder GG20HC hergestellt.

Im gezeigten Ausführungsbeispiel ist der Reibring 3 durch eine Vielzahl von axialen 17) und radialen 18, 18', ... Kanälen durchbrochen ist. Selbstverständlich können innerhalb der Erfindung auch massive oder nur in eine Richtung durchbrochen Reibringe verwendet werden.

An dem Reibring 3 ist ein kreiszylindrischer, konzentrisch zur Drehachse A axial in Richtung Bremsscheibentopf 2 vorgestreckter Kragen 7 ausgebildet.

Der Kragen 7 umgreift und überlappt den Topfmantel 5 radial außen, so dass durch den Überlappungsbereich ein Verbindungsbereich 8 definiert ist. Zwischen dem Topfmantel 5 und dem Kragen 7 ist im Verbindungsbereich 8 in radiale Richtung eine Spielpassung vorgesehen.

Im Verbindungsbereich 8 sind der Topfmantel 5 und der Kragen 7 mit mehreren, regelmäßig über den Umfang verteilten und jeweils zueinander fluchtenden Durchbrüchen 13,14 versehen, welche durch orthogonal zur Drehachse A ausgerichtete Verbindungselemente 9,9',9", ... durchgegriffen sind.

Bei der gezeigten bevorzugten Ausführungsform sind die Verbindungselemente 9 als Halbhohlniete ausgeführt. Innerhalb der Erfindung sind jedoch sowohl Voll- oder Hohlnieten, als auch diverse Schrauben-Mutter-Verbindungen zulässig.

An dem radialen Außenrand des Topfbodens 5, im Übergangsbereich 10 in den Topfmantel 5 ist an dem Bremsscheibentopf 2 eine umlaufende Schulter 11 ausgebildet. Diese stellt eine Art massive radiale lokale Aufdickung des Topfmantels 5 dar und erstreckt sich sowohl in radiale als auch axiale Richtung um mindestens das Zweifache der Bodenstärke B. Mit seinem reibringseitigen axialen Ende bildet die Schulter 11 einen axialen Anschlag 12 für die axiale Stirnseite 19 den Kragens 7.

### Bezugszeichen

- 1: Verbundbremsscheibe
- 2: Bremsscheibentopf
- 3: Reibring
- 4: Topfboden
- 5: Topfmantel
- 6: Reibflächen
- 7: Kragen
- 8: Verbindungsbereich
- 9: Verbindungselement
- 10: Übergangsbereich
- 11: Umlaufende Schulter
- 12: Anschlag
- 13: Durchbruch
- 14: Durchbruch
- 15: Wulst
- 16: Verbindungsbohrung
- 17: Kanal
- 18: Kanal
- 19: Stirnseite
- A: Drehachse
- B: Bodenstärke
- M: Mantelstärke

## Patentansprüche

1. Verbundbremsscheibe (1) für eine Fahrzeug-Scheibenbremse umfassend einen aus einem ersten Werkstoff ausgeführten Bremsscheibentopf (2) und einen aus einem anderen Werkstoff ausgeführten, mit dem Bremsscheibentopf (2) verbundenen Reibring (3), wobei der Bremsscheibentopf (2) einen in Bezug auf eine Drehachse (A) in radiale Richtung erstreckten Topfboden (4) und einen vom Topfboden (4) konzentrisch zur Drehachse (A) erstreckten kreiszylindrischen Topfmantel (5) aufweist, wobei der Reibring (3) wenigstens zwei in Bezug auf die Drehachse (A) in radiale Richtung ausgerichtete Reibflächen (6,6') und einen konzentrisch zur Drehachse (A) axial in Richtung Bremsscheibentopf (2) vorgestreckten kreiszylindrischen Kragen (7) aufweist, wobei der Topfmantel (5) und der Kragen (7) sich in einem Verbindungsbereich (8) in radiale Richtung bereichsweise überlappen und durch mehrere, im Wesentlichen orthogonal zur Drehachse (A) ausgerichtete Verbindungselemente (9,9',9",...) durchgegriffen sind, und der Kragen (7) den Topfmantel (5) im Verbindungsbereich (8) radial außen umgreift, **dadurch gekennzeichnet dass** der Bremsscheibentopf (2) in einem Übergangsbereich (10) zwischen dem Topfboden (4) und dem Topfmantel (5) eine nach radial außen vorgestreckte massive umlaufende Schulter (11) aufweist, welche in radiale und axiale Richtungen signifikant stärker als eine Bodenstärke (B) des Topfbodens (2) ausgebildet ist, insbesondere mindestens das Zweifache der Bodenstärke (B) beträgt.

2. Verbundbremsscheibe (1) nach Anspruch 1 **dadurch gekennzeichnet, dass** die Schulter (11) einen axialen Anschlag (12) für den Kragen (7) bildet.

3. Verbundbremsscheibe (1) nach wenigstens einem der vorstehenden Ansprüche **dadurch gekennzeichnet, dass** der Verbindungsbereich (8) in radiale Richtung eine Spielpassung aufweist.

4. Verbundbremsscheibe (1) nach wenigstens einem der vorstehenden Ansprüche **dadurch gekennzeichnet, dass** die Verbindungselemente (9) als Niete, insbesondere Halbhohlniete ausgeführt sind.

5. Verbundbremsscheibe (1) nach wenigstens einem der Ansprüche 1 bis 3, **dadurch gekennzeichnet, dass** die Verbindungselemente (9) als Schraubelemente, insbesondere Schrauben-Mutter-Kombinationen ausgeführt sind.

6. Verbundbremsscheibe (1) nach wenigstens einem der vorstehenden Ansprüche **dadurch gekennzeichnet, dass** der Kragen (7) und der Topfmantel (5) im Verbindungsbereich (8) zum Durchgriff mit den Verbindungselementen jeweils zueinander fluchtende Durchbrüche (13,14), insbesondere Bohrungen, aufweisen.

7. Verbundbremsscheibe (1) nach wenigstens einem der vorstehenden Ansprüche **dadurch gekennzeichnet, dass** am Topfboden (4) eine axial in Richtung Reibring (3) vorgestreckte, umlaufende Wulst (15) ausgebildet ist und axiale Verbindungsbohrungen (16) zum Durchgriff von Radschrauben oder Radbolzen im Bereich der Wulst (15) angeordnet sind.

8. Verbundbremsscheibe (1) nach wenigstens einem der vorstehenden Ansprüche **dadurch gekennzeichnet, dass** der Bremsscheibentopf (2) aus einem Stahlwerkstoff, insbesondere einem hochlegierten, insbesondere einem zumindest rostträgen Stahlwerkstoff ausgeführt ist.

9. Verbundbremsscheibe (1) nach wenigstens einem der vorstehenden Ansprüche **dadurch gekennzeichnet, dass** der Reibring (3) durch mehrere in axiale und/oder radiale Richtung erstreckende Kanäle (17,18) durchbrochen ist.

## Claims

1. Composite brake disk (1) for a vehicle disk brake, comprising a brake disk pot (2) formed from a first material, and a friction ring (3), which is formed from a different material and is connected to the brake disk pot (2), wherein the brake disk pot (2) has a pot base (4) extending in the radial direction with respect to an axis of rotation (A), and a circular-cylindrical pot shell (5) extending from the pot base (4) concentrically with respect to the axis of rotation (A), wherein the friction ring (3) has at least two friction surfaces (6, 6') oriented in the radial direction with respect to the axis of rotation (A), and a circular-cylindrical collar (7) pre-stretched axially in the direction of the brake disk pot (2) concentrically with respect to the axis of rotation (A), wherein the pot shell (5) and the collar (7) overlap in some regions in the radial direction in a connecting region (8) and are penetrated by a plurality of connecting elements (9, 9', 9", ...) oriented substantially orthogonally with respect to the axis of rotation (A), and the collar (7) engages radially on the outside around the pot shell (5) in the connecting region (8), **characterized in that** the brake disk pot (2) in a transition region (10) between the pot base (4) and the pot shell (5) has a solid, encircling shoulder (11) which is pre-stretched radially outward and is significantly stronger in the radial and axial directions than a base thickness (B) of the pot base (2), in particular is at least twice the base thickness (B).

2. Composite brake disk (1) according to Claim 1, **characterized in that** the shoulder (11) forms an axial stop (12) for the collar (7).

3. Composite brake disk (1) according to at least one of the preceding claims, **characterized in that** the connecting region (8) has a clearance fit in the radial direction.

4. Composite brake disk (1) according to at least one of the preceding claims, **characterized in that** the connecting elements (9) are designed as rivets, in particular semi-tubular rivets.

5. Composite brake disk (1) according to at least one of Claims 1 to 3, **characterized in that** the connecting elements (9) are designed as screw elements, in particular screw and nut combinations.

6. Composite brake disk (1) according to at least one of the preceding claims, **characterized in that** the collar (7) and the pot shell (5) have respective mutually aligned apertures (13, 14), in particular bores, in the connecting region (8) for penetration by the connecting elements.

7. Composite brake disk (1) according to at least one of the preceding claims, **characterized in that** an encircling bead (15) which is pre-stretched axially in the direction of the friction ring (3) is formed on the pot base (4), and axial connecting bores (16) for penetration of wheel screws or wheel bolts are arranged in the region of the bead (15).

8. Composite brake disk (1) according to at least one of the preceding claims, **characterized in that** the brake disk pot (2) is formed from a steel material, in particular a high-alloy steel material, in particular an at least rust-resistant steel material.

9. Composite brake disk (1) according to at least one of the preceding claims, **characterized in that** the friction ring (3) is perforated by a plurality of channels (17, 18) extending in the axial and/or radial direction.

## Revendications

1. Disque de frein composite (1) pour un frein à disque de véhicule comprenant un pot de disque de frein (2) réalisé dans un premier matériau et une bague de friction (3) réalisée dans un autre matériau, reliée au pot de disque de frein (2), le pot de disque de frein (2) présentant un fond de pot (4) s'étendant dans la direction radiale par rapport à un axe de rotation (A) et une enveloppe de pot cylindrique circulaire (5) s'étendant depuis le fond de pot (4) concentriquement à l'axe de rotation (A), la bague de friction (3) présentant au moins deux surfaces de friction (6, 6') orientées dans la direction radiale par rapport à l'axe de rotation (A) et une collerette cylindrique circulaire (7) s'avançant axialement en direction du pot de disque de frein (2) concentriquement à l'axe de rotation (A), l'enveloppe de pot (5) et la collerette (7) se chevauchant par zones en direction radiale dans une zone de liaison (8) et étant traversées par plusieurs éléments de liaison (9, 9', 9",...) orientés essentiellement orthogonalement à l'axe de rotation (A), et la collerette (7) venant en prise autour de l'enveloppe de pot (5) radialement à l'extérieur dans la zone de liaison (8), **caractérisé en ce que** le pot de disque de frein (2) présente, dans une zone de transition (10) entre le fond de pot (4) et l'enveloppe de pot (5), un épaulement périphérique massif (11) qui s'avance radialement vers l'extérieur, qui est configuré sous forme significativement plus épaisse dans les directions radiale et axiale qu'une épaisseur de fond (B) du fond de pot (2), notamment qui est au moins le double de l'épaisseur de fond (B).

2. Disque de frein composite (1) selon la revendication 1, **caractérisé en ce que** l'épaulement (11) forme une butée axiale (12) pour la collerette (7).

3. Disque de frein composite (1) selon au moins l'une quelconque des revendications précédentes, **caractérisé en ce que** la zone de liaison (8) présente un ajustement avec jeu dans la direction radiale.

4. Disque de frein composite (1) selon au moins l'une quelconque des revendications précédentes, **caractérisé en ce que** les éléments de liaison (9) sont réalisés sous forme de rivets, notamment de rivets semi-creux.

5. Disque de frein composite (1) selon au moins l'une quelconque des revendications 1 à 3, **caractérisé en ce que** les éléments de liaison (9) sont réalisés sous forme d'éléments à vis, notamment de combinaisons vis-écrou.

6. Disque de frein composite (1) selon au moins l'une quelconque des revendications précédentes, **caractérisé en ce que** la collerette (7) et l'enveloppe de pot (5) présentent, dans la zone de liaison (8), des ouvertures (13, 14), notamment des alésages, alignées les unes avec les autres pour le passage des éléments de liaison.

7. Disque de frein composite (1) selon au moins l'une quelconque des revendications précédentes, **caractérisé en ce que** sur le fond de pot (4) est formé un bourrelet périphérique (15) qui s'avance axialement en direction de la bague de friction (3) et des alésages de liaison axiaux (16) sont agencés dans la zone du bourrelet (15) pour le passage de vis de roue ou de boulons de roue.

8. Disque de frein composite (1) selon au moins l'une quelconque des revendications précédentes, **caractérisé en ce que** le pot de disque de frein (2) est réalisé en un matériau d'acier, notamment un matériau d'acier fortement allié, notamment un matériau d'acier au moins résistant à la corrosion.

9. Disque de frein composite (1) selon au moins l'une quelconque des revendications précédentes, **caractérisé en ce que** la bague de friction (3) est percée par plusieurs canaux (17, 18) s'étendant dans la direction axiale et/ou radiale.
